(19) Europäisches Patentamt
European Patent Office
Office européen des brevets

(11) Veröffentlichungsnummer: **0 573 775 A1**

# (12) EUROPÄISCHE PATENTANMELDUNG

(21) Anmeldenummer: **93107145.0**

(22) Anmeldetag: **03.05.93**

(51) Int. Cl.5: **C08K 5/15**, C08G 18/70, C08L 75/04, //(C08L75/04,63:00)

(30) Priorität: **14.05.92 DE 4215875**

(43) Veröffentlichungstag der Anmeldung: **15.12.93 Patentblatt 93/50**

(84) Benannte Vertragsstaaten: **BE DE ES FR GB IT LU NL SE**

(71) Anmelder: **BAYER AG**
**D-51368 Leverkusen(DE)**

(72) Erfinder: **Jansen, Bernhard, Dr.**
**Roggendorfstrasse 65**
**W-5000 Köln 80(DE)**
Erfinder: **Grönen, Jürgen, Dr.**
**Im Grasgarten 13**
**W-5063 Overath(DE)**
Erfinder: **Müller, Hanns Peter, Dr.**
**Hollweg 20**
**W-5068 Odenthal-Höffe(DE)**

## (54) Witterungsstabile Formteile auf Basis von Polyisocyanat-Polyadditionsprodukten.

(57) Die Verwendung von Epoxidgruppen aufweisenden organischen Verbindungen, die einer Wärmebehandlung bei 30 bis 150 °C in Gegenwart eines Alkylierungsmittels unterzogen worden sind, als die Witterungsstabilität erhöhende Hilfsmittel bei der Herstellung von Formkunststoffen auf Basis von Polyisocyanat-Polyadditionsprodukten nach der Reaktionsspritzgußtechnik.

EP 0 573 775 A1

Die Erfindung betrifft die Verwendung von Epoxidgruppen aufweisenden Verbindungen, die in Gegenwart von Alkylierungsmitteln einer Wärmebehandlung unterzogen worden sind, als die Witterungsstabilität verbessernde Hilfsmittel bei der Herstellung von Formteilen auf Basis von Polyisocyanat-Polyadditionsprodukten nach dem Reaktionsspritzgußverfahren ("RIM-Verfahren").

Die Witterungsstabilität von RIM-Formteilen, die im allgemeinen unter Verwendung von aromatischen Polyisocyanaten hergestellt werden, läßt in der Regel sehr stark zu wünschen übrig, so daß ihre Verwendung im Außenbereich, wie z.B. als Scheibenummantelungsmaterial für Automobilfenster, nicht in Betracht kommt, obwohl alle gewünschten mechanischen Eigenschaften erfüllt werden können. Eine Lackierung des fertigen Scheibenmoduls ist zwar eine Möglichkeit, den Lichtschutz zu gewährleisten, stellt aber einen zusätzlichen und auch teuren Fertigungsschritt dar.

Eine weitere Möglichkeit des Witterungsschutzes für RIM-Formkörper auf Basis von aromatischen Polyisocyanaten stellen die konventionellen Licht- und Alterungsschutzmittel dar, die aufgrund ihrer chemischen Struktur als Radikalfänger wirken und Zerfallsreaktionen reduzieren können. Diese Schutzsubstanzen verbrauchen sich jedoch aufgrund ihrer chemischen Wirkung, so daß ein Zusammenbruch des Witterungsschutzes beobachtet wird, sobald die eingesetzten Hilfsmittel aufgebraucht sind.

RIM-Formteile, die unter Verwendung von aliphatischen Polyisocyanaten hergestellt worden sind, sind in der Regel wesentlich witterungsstabiler und benötigen keine Stabilisierung. Die Verwendung von aliphatischen Polyisocyanaten bei der großtechnischen Serienproduktion von RIM-Formteilen scheidet jedoch bereits wegen des zu hohen Preises dieser Polyisocyanate aus,

Wie jetzt gefunden wurde, eignen sich organische, Epoxidgruppen aufweisende Verbindungen, die in Gegenwart von alkylierend wirkenden Substanzen einer Wärmebehandlung unterzogen worden sind, als äußerst wirksame, die Witterungsstabilität von RIM-Formteilen auf Basis von Polyisocyanat-Polyadditionsprodukten, insbesondere auf Basis von gegebenenfalls Harnstoffgruppen aufweisenden Polyurethanen, erhöhende Hilfs- bzw. Zusatzmittel.

Reaktionsgemische, die organische Polyisocyanate, Epoxidgruppen aufweisende Verbindungen und alkylierend wirkende Substanzen enthalten sind beispielsweise aus EP-A-0 272 563, EP-A-0 331 996 oder EP-A-0 368 031 bekannt, wobei insbesondere gemäß EP-A-0 368 031 auch eine Wärmebehandlung der Epoxidkomponente in Gegenwart eines Alkylierungsmittels in Betracht gezogen wird, Die Reaktivsysteme der genannten Vorveröffentlichungen werden jedoch nicht zur Herstellung von Formteilen nach dem Prinzip der Reaktionsspritzgußtechnik eingesetzt, außerdem fehlt jeder Hinweis auf eine stabilisierende Wirkung von, einer Wärmebehandlung in Gegenwart von Alkylierungsmittel unterzogenen, Epoxidgruppen aufweisenden Verbindungen im Sinne der nachstehend näher beschriebenen erfindungsgemäßen Verwendung.

Gegenstand der Erfindung ist die Verwendung von Epoxidgruppen aufweisenden organischen Verbindungen, die einer Wärmebehandlung bei 30 bis 150 °C in Gegenwart eines Alkylierungsmittels unterzogen worden sind, als die Witterungsstabilität erhöhende Hilfsmittel bei der Herstellung von Formkunststoffen auf Basis von Polyisocyanat-Polyadditionsprodukten nach der Reaktionsspritzgußtechnik.

Die erfindungswesentlichen Hilfsmittel werden als Zusatzmittel in Reaktivsystemen eingesetzt, wie sie in an sich bekannter Weise zur Herstellung von Formteilen auf Basis von Polyisocyanat-Polyadditionsprodukten, insbesondere auf Basis von gegebenenfalls Harnstoffgruppen aufweisenden Polyurethanen nach der Reaktionsspritzgußtechnik verwendet werden, Dies bedeutet, daß die erfindungswesentlichen Hilfsmittel beispielsweise als Zusatzmittel beim Verfahren gemäß US-PS 4 065 410 (Herstellung von RIM-Formteilen auf Polyurethanbasis), ebenso singesetzt werden können wie beispielsweise beim Verfahren gemäß US-PS 4 218 543 (Herstellung von Formteilen auf Basis von Harnstoffgruppen aufweisenden Polyurethanen nach dem Prinzip der Reaktionsspritzgußtechnik) oder beim Verfahren gemäß US-PS 4 774 263 bzw. EP-B 00 81 701 (Herstellung von Formteilen auf Polyharnstoffbasis nach dem Prinzip der Reaktionsspritzgußtechnik).

Diesen Verfahren gemeinsam ist ein Arbeiten nach dem "one-shot-Prinzip", gemäß welchem die Polyisocyanatkomponente mit der "Polyolkomponente" einstufig nach dem Prinzip der Reaktionsspritzgußtechnik in geschlossenen Formen zur Umsetzung gebracht wird, wobei die "Polyolkomponente" im allgemeinen aus einem Gemisch aus (i) höhermolekularen Polyetherpolyolen bzw. Aminopolyethern, beispielsweise des Molekulargewichtsbereichs 1800 bis 12 000 mit (ii) niedermolekularen, mehrwertigen Alkoholen und/oder Aminen, vorzugsweise sterisch gehinderten aromatischen Diaminen (US-PS 4 218 543), sowie (iii) den üblichen Hilfe- und Zusatzmitteln besteht. Als Polyisocyanatkomponente werden bei diesen Verfahren in der Regel aromatische Polyisocyanate, insbesondere bei Raumtemperatur flüssige, gegebenenfalls urethan- und/oder carbodiimid- bzw. uretoniminmodifizierte Polyisocyanate bzw. Polyisocyanatgemische der Diphenylmethanreihe eingesetzt.

Die erfindungsgemäße Verwendung ist jedoch nicht auf diese Verfahren des Standes der Technik beschränkt, sie eignen sich beispielsweise auch zur Modifizierung der Verfahrensweise gemäß DE-PS 38 27 595, DE-OS 39 14 718, DE-OS 41 15 037, US-PS 4 297 444 oder US-PS 4 374 210.

Den Verfahren dieser Vorveröffentlichungen gemeinsam ist eine zweistufige Arbeitsweise, derzufolge zunächst in einer Vorreaktion aus der Polyisocyanatkomponente und zumindest einem Teil der höhermolekularen Reaktivkomponente (i) ein NCO-Semiprepolymer hergestellt wird, welches dann nach dem Prinzip der Reaktionsspritzgußtechnik in geschlossenen Formen mit einem Gemisch aus Kettenverlängerungs- bzw. Vernetzungsmittel (ii), den üblichen Hilfs- und Zusatzmitteln (iii) und gegebenenfalls noch vorliegenden restlichen Anteilen der Komponente (i) zur Reaktion gebracht wird.

Bei den erfindungswesentlichen Zusatzmitteln handelt es sich um Epoxidgruppen aufweisende Verbindungen, die in Gegenwart von alkylierend wirkenden Substanzen einer Wärmebehandlung unterzogen worden sind.

Bei der Epoxid-Komponente handelt es sich um mindestens ein organisches Epoxid, vorzugsweise um mindestens eine organische Verbindung, die pro Molekül 1 bis 4, insbesondere 1 bis 2 Epoxidgruppen bei einem Epoxidäquivalentgewicht von 70 bis 500, vorzugsweise 170 bis 220, aufweist. Geeignet sind Monoepoxide wie beispielsweise Phenoxypropylenoxid, Styroloxid oder Glycidalkohol oder höherfunktionelle Polyepoxide wie beispielsweise Polyglycidylether mehrwertiger Phenole, insbesondere von Bisphenol A, aber auch z.B. von Bisphenolen der allgemeinen Formel:

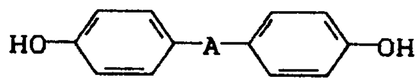

mit A = $-SO_2$, $-CO-$, $-O-$, $-S-$, $-CH_2$,

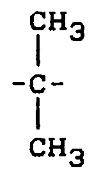 ,

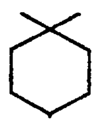 oder 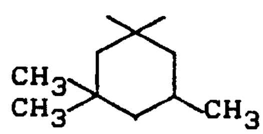

Polyepoxidverbindungen auf der Basis von aromatischen Aminen, insbesondere Bis-(N-Epoxypropyl)-anilin, N,N'-Dimethyl-N,N'-diepoxypropyl-4,4'-diaminodiphenylmethan und N-Diepoxypropyl-4-aminophenylglycidylether; Polyglycidylester aus cycloaliphatischen Dicarbonsäuren, insbesondere Hexahydrophthalsäurediglycidylester und Polyepoxide aus dem Umsetzungsprodukt von n Molen Hexahydrophthalsäureanhydrid und 1 Mol eines Polyols mit n Hydroxylgruppen (n = ganze Zahl von 2 bis 6), insbesondere aus dem Umsetzungsprodukt von 3 Mol Hexahydrophthalsäureanhydrid und einem Mol 1,1,1-Trimethylolpropan.

Geeignete Alkylierungsmittel sind beispielsweise Methyliodid, Dimethylsulfat oder vorzugsweise Sulfonsäurealkylester des Molekulargewichtsbereichs 110 bis 250 mit 1 bis 4 Kohlenstoffatomen im Alkylrest. Hierzu gehören sowohl aliphatische Sulfonsäurealkylester wie Methansulfonsäuremethylester, n-Butansulfonsäuremethylester, n-Perfluorbutansulfonsäuremethylester, n-Hexansulfonsäureethylester als auch aromatische Sulfonsäurealkylester wie Benzolsulfonsäuremethylester, -ethylester oder -n-butylester, p-Toluolsulfonsäuremethylester, -ethylester oder -n-butylester, 1-Naphthalinsulfonsäure-methylester, 3-Nitrobenzolsulfonsäure-methylester oder 2-Naphthalinsulfonsäuremethylester. Die beispielhaft genannten aromatischen Sulfonsäureester sind bevorzugt. Besonders bevorzugt wird p-Toluolsulfonsäuremethylester verwendet.

Die Alkylierungsmittel werden im allgemeinen in einer Menge von 0,005 bis 1 Gew.-%, vorzugsweise von 0,05 bis 0,25 Gew.-%, bezogen auf das Gewicht der Epoxid-Komponente eingesetzt. Vor der Wärmebehandlung wird ein Gemisch aus der Epoxid-Komponente und dem Alkylierungsmittel hergestellt,

welches gegebenenfalls zusätzlich noch zumindest einen Teil der Polyisocyanatkomponente enthalten kann, die zur Herstellung der Formkörper Verwendung findet. Wesentlich ist jedoch lediglich das gleichzeitige Vorliegen der Epoxid-Komponente und des Alkylierungsmittels im angegebenen Mengenverhältnis während der Wärmebehandlung. Die Wärmebehandlung selbst besteht im allgemeinen in einer Erwärmung des Gemischs während eines Zeitraums von 5 Minuten bis 2,5 Stunden, vorzugsweise von 15 mit 60 Minuten auf 30 bis 150, vorzugsweise 80 bis 130 °C.

Bei der erfindungsgemäßen Verwendung der der genannten Wärmebehandlung unterzogenen, Epoxidgruppen aufweisenden Verbindungen werden diese vorzugsweise in Abmischung mit der Polyisocyanatkomponente eingesetzt, wobei die bevorzugte Variante in der zuletzt genannten Wärmebehandlung eines Gemischs (i) zumindest eines Teils der Polyisocyanatkomponente, (ii) der Epoxidkomponente und (iii) des Alkylierungsmittels besteht, so daß unmittelbar eine Polyisocyanatkomponente erhalten wird, die den erfindungswesentlichen Stabilisator enthält. Grundsätzlich möglich ist jedoch auch eine separate Wärmebehandlung und eine Abmischung des so vorbehandelten Hilfsmittels mit der Polyisocyanatkomponente oder mit der "Polyolkomponente", vorausgesetzt, diese ist gegenüber Epoxidgruppen aufweisenden Verbindungen weitgehend inert. Vorzugsweise erfolgt der Einsatz der erfindungswesentlichen Hilfsmittel in Abmischung mit der Polyisocyanatkomponente, bzw. bei den oben angesprochenen Semi-Prepolymerverfahren in Abmischung mit den NCO-Semiprepolymeren.

Bei allen Varianten der erfindungsgemaßen Verwendung werden die erfindungswesentlichen Hilfsmittel in solchen Mengen eingesetzt, daß der Gewichtsanteil der der Wärmebehandlung zu unterziehenden Epoxid-Komponente 2,5 bis 40, vorzugsweise 5 bis 30 Gew.-%, bezogen auf das Gesamtgewicht des Reaktionsansatzes bei der Herstellung der Formkörper ausmacht,

Eine Optimierung der stabilisierenden Wirkung der erfindungswesentlichen Hilfsmittel wird erreicht, wenn bei der Herstellung der Formkörper anstelle der üblichen aromatischen Polyisocyanate, insbesondere anstelle der genannten, bei Raumtemperatur flüssigen Polyisocyanate oder Polyisocyanatgemische der Diphenylmethanreihe Abmischungen dieser aromatischen Polyisocyanate mit bis zu 15 Gew.-%, vorzugsweise 1 bis 10 Gew.-%, bezogen auf das Gesamtgewicht der Polyisocyanate, an (cyclo)aliphatischen Polyisocyanaten eingesetzt werden. Zur Herstellung dieser Abmischungen geeignete (cyclo)aliphatische Polyisocyanate sind beispielsweise Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethylcyclohexan, Perhydro-2,4'- und/oder -4,4'-diphenylmethandiisocyanat oder Modifizierungsprodukte der obengenannten aliphatischen Polyisocyanate mit z.B. Isocyanurat-, Carbodiimid-, Allophanat-, Biuret- oder Uretdion-Struktureinheiten, wie sie nach an sich bekannten Verfahren des Standes der Technik aus den beispielhaft genannten einfachen Diisocyanaten hergestellt werden können.

Erfindungsgemäß besonders bevorzugte Polyisocyanate aliphatischer Natur sind die in der Polymethanchemie üblichen technischen Isocyanate wie z.B. Hexamethylendiisocyanat, 1-Isocyanato-3,3,5-trimethyl-5-isocyanatomethyl-cyclohexan (Isophorondiisocyanat, abgekürzt: IPDI), 4,4'-Diisocyanatodicyclohexylmethan und die Biuret- oder Isocyanuratgruppen aufweisenden Modifizierungsprodukte dieser technischen Polyisocyanate.

Bei der Herstellung der Formkörper unter erfindungsgemäßer Verwendung der erfindungswesentlichen Hilfsmittel können im übrigen Ausgangskomponenten der an sich bekannten Art, wie sie beispielhaft in den oben zitierten Vorveröffentlichungen genannt sind, verwendet werden.

Bevorzugt besteht die Polyisocyanatkomponente aus aromatischen Polyisocyanaten, insbesondere bei Raumtemperatur flüssigen Polyisocyanaten oder Polyisocyanatgemischen der Diphenylmethanreihe der bereits obengenannten Art bzw. aus Abmischungen derartiger Polyisocyanate mit (cyclo)aliphatischen Polyisocyanaten der zuletzt genannten Art.

Bei der höhermolekularen Komponente mit gegenüber Isocyanatgruppen reaktionsfähigen Gruppen handelt es sich vorzugsweise um an sich bekannte Polyetherpolyole des Molekulargewichtsbereichs 400 bis 12 000, vorzugsweise 1800 bis 12 000 mit überwiegend (mindestens 80 %) primär gebundenen Hydroxylgruppen und einer Hydroxylfunktionalität von 2 bis 3.

Bei der Kettenverlängerungs- bzw. Vernetzerkomponente handelt es sich vorzugsweise um einfache niedermolekulare Alkohole des Molekulargewichtsbereichs 62 bis 400 wie beispielsweise Ethylenglykol, Propylenglykol, Butandiol-1,4, Glycerin, Trimethylolpropan oder Gemische derartiger mehrwertiger Alkohole oder, besonders bevorzugt, um aromatische Diamine mit sterisch gehinderten Aminogruppen der in US-PS 4 218 543 genannten Art. Ganz besonders bevorzugtes Kettenverlängerungsmittel ist 1-Methyl-3,5-diethyl-2,4-diaminobenzol bzw. seine technischen Gemische mit 1-Methyl-3,5-diethyl-2,6-diaminobenzol (DETDA).

Auch erfindungsgemäß können die üblichen sonstigen Hilfe- und Zusatzmittel mitverwendet werden.

Geeignete Hilfe- und Zusatzmittel sind beispielsweise Füllstoffe, insbesondere verstärkend wirkende Füllstoffe, wie silikatische Mineralien, beispielsweise Schichtsilikate wie Antigorit, Serpentin, Wollastonit und insbesondere Glasfasern verschiedener Länge, die gegebenenfalls geschlichtet sein können, Pigmente wie beispielsweise Titandioxid oder Eisenoxid-Pigmente, Katalysatoren wie beispielsweise tert. Amine wie Triethylamin, Triethylendiamin, N,N-Dimethylbenzylamin, Zinn-Katalysatoren wie beispielsweise Dibutylzinndilaurat oder innere Formtrennmittel, wie sie beispielsweise in US-PS 3 726 952, GB-OS 1 356 215, DE-OS 2 356 692, DE-OS 2 363 452, DE-OS 2 404 310, DE-OS 2 427 273, DE-OS 2 431 968 oder GB-PS 1 420 293 beschrieben sind. Auch Zinksalze, insbesondere Zinkstearat in Kombination mit geeigneten Verträglichmachern (vgl. diesbezüglich beispielsweise EP-A-0 255 905, EP-B-0 173 888, EP-B-0 190 317 oder EP-A-0 119 471) kann als inneres Formtrennmittel mitverwendet werden.

Bei der erfindungsgemäße Verwendung werden die beispielhaft genannten Reaktionspartner unter Verwendung der für das Reaktionsspritzgußverfahren üblichen Mischaggregate miteinander vermischt und in eine geschlossene Form eingetragen. Als Formmaterial kommen die üblichen Werkstoffe, insbesondere Metall oder Kunststoff in Betracht.

Die Menge des in die Form eingetragenen Reaktionsgemisches wird im allgemeinen so bemessen, daß Formkörper des Dichtebereichs 0,8 bis 1,4 g/$cm^3$ , insbesondere 1,0 bis 1,3 g/$cm^3$ resultieren- Formkörper einer über 1,2 g/$cm^3$ liegenden Dichte werden im allgemeinen dann erhalten, wenn Füllstoffe der beispielhaft genannten Art einer hohen Dichte mitverwendet werden. Formkörper einer unter 1,0 g/$cm^3$ liegenden Dichte werden im allgemeinen dann erhalten, wenn die Form nur unvollständig mit Reaktionsgemisch befüllt wird und gleichzeitig ein Treibmittel der an sich bekannten Art mitverwendet wird.

Die Herstellung der Formkörper erfolgt im übrigen unter Verwendung von solchen Mengenverhältnissen der Reaktionspartner, die einer NCO-Kennzahl von 90 bis 250, vorzugsweise 100 bis 200 entsprechen. Unter NCO-Kennzahl ist in obigem Zusammenhang das Verhältnis der NCO-Gruppen zu allen im Reaktionsgemisch vorliegenden, gegenüber NCO-Gruppen reaktionsfähigen Gruppen zu verstehen.

Erfindungsgemäß werden insbesondere flexible, kompakte Formteile, welche sich durch eine gute Witterungsbeständigkeit und hervorragende mechanische Werte auszeichnen, hergestellt.

Die Formteile können zur Herstellung von Karosserieteilen von Fahrzeugen, besonders Scheibenprofilen, aber auch Möbelteilen, technischen Geräten und Bauelementen Verwendung finden.

In den nachfolgenden Beispielen beziehen sich alle Prozentangaben auf das Gewicht.

## Beispiele

### Polyolkomponente 1

Polyolgemisch der OH-Zahl 104 und einer Viskosität bei 20 °C von 1400 mPa.s, bestehend aus 82,0 Gew.-Teilen eines Polyethers der OH-Zahl 28, hergestellt durch Propoxylierung von Trimethylolpropan und anschließender Ethoxylierung des Propoxylierungsprodukts (PO:EO-Gewichtsverhältnis = 78:22), 3,8 Gew.-Teilen einer Suspension bestehend aus 10 % Ruß und 90 % eines Polyetherpolyols der OH-Zahl 35, hergestellt durch Propoxylierung von Trimethylolpropan und anschließende Ethoxylierung des Propoxylierungsprodukts (PO:EO-Gewichtsverhätlnis = 86,5 : 13,5), 10,1 Gew.-Teilen DETDA (Gemisch aus 65 % 1-Methyl-3,5-diethyl-2,4-diaminobenzol und 35 % 1-Methyl-3,5-diethyl-2,6-diaminobenzol), 3,9 Gew.-Teilen Bis-(2,2',6,6'-tetramethyl-4-piperidyl)-sebacat als UV-Schutzmittel, 0,1 Gew.-Teilen Triethylendiamin (33 % Lösung in Dipropylenglykol) und 0,1 Gew.-Teilen Dibutylzinndilaurat.

### Polyolkomponente 2

Polyolgemisch der OH-Zahl 108 und einer Viskosität bei 20 °C, von 1700 mPa.s, bestehend aus 79,8 Gew.-Teilen des obengenannten Polyetherpolyols der OH-Zahl 28, 3,7 Gew.-Teilen der obengenannten Rußsuspension, 12,6 Gew.-Teilen DETDA der obengenannten Zusammensetzung, 3,7 Gew.-Teilen Bis-(2,2',6,6'-tetramethyl-4-piperidyl)-sebacat als UV-Schutzmittel, 0,1 Gew.-Teilen Triethylendiamin (33 % Lösung in Dipropylenglykol) und 0,1 Gew.-Teilen Dibutylzinndilaurat.

### Polyolkomponente 3

Polyolgemisch der OH-Zahl 127 und einer Viskosität bei 20 °C von 1700 mPa.s, bestehend aus 82,5 Gew.-Teilen des obengenannten Polyetherpolyols der OH-Zahl 28, 6,0 Gew.-Teilen Ethylenglykol, 4,0 Gew.-Teilen der obengenannten Rußsuspension, 4,0 Gew.-Teile eines handelsüblichen UV-Stabilisators (®Tinuvin 765, Hersteller: CIBA-GEIGY AG), 1,5 Gew.-Teilen eines weiteren handelsüblichen UV-Stabilisators

(®Tinuvin P, Hersteller: CIBA GEIGY AG), 1,5 Gew.-Teilen eines weiteren handelsüblichen UV-Stabilisators (®Irganox 1010, Hersteller: CIBA GEIGY AG), 0,3 Gew.-Teilen einer 33 %igen Lösung von Triethylendiamin in Dipropylenglykol und 0,2 Gew.-Teilen Dibutylzinndilaurat.

Polyisocyanat 1 (Vergleich)

Umsetzungsprodukt von 4,4'-Diisocyanatodiphenylmethan mit Tripropylenglykol mit einem NCO-Gehalt von 23 %.

Polyisocyanat 2 (erfindungsgemäß)

96 Gew.-Teile Polyisocyanat 1, 24 Gew.-Teile des Bis-glycidylethers von Bisphenol A und 0,15 Gew.-Teile p-Toluolsulfonsäuremethylester werden zusammen vorgelegt und unter Rühren für 1 Stunde auf 120 °C erhitzt. Nach dem Abkühlen liegt der Isocyanatgehalt bei 17,4 %.

Polyisocyanat 3 (erfindungsgemäß)

108 Gew.-Teile Polyisocyanat 1, 12 Gew.-Teile des Bis-glycidylethers des Bisphenol A und 0,15 Gew.-Teile p-Toluolsulfonsäuremethylester werden zusammen vorgelegt und unter Rühren für 1 Stunde auf 120 °C erhitzt.

Nach dem Abkühlen liegt der Isocyanatgehalt bei 19,8 %.

Herstellung der Formkörner

Unter Verwendung der vorstehend genannten Polyolkomponenten und Polyisocyanate werden nach dem Prinzip der Reaktionsspritzgußtechnik Formkörper hergestellt, wobei die Durchmischung der Reaktanten unter Verwendung eines üblichen Rimdomats erfolgte und als Form eine solche aus Aluminium der Abmessung 3 x 200 x 500 mm verwendet wurde, deren Innenwände mit einem äußeren Formtrennmittel auf Seifenbasis vorbehandelt worden waren. Das Mengenverhältnis der Reaktionspartner entsprach einer NCO-Kennzahl von 118. Die Form wurde mit dem Reaktionsgemisches vollständig befüllt, so daß Formkörper der Dichte 1,0 g/cm$^3$ resultierten. Vor der Durchmischung der Reaktanten wurden diese auf 40 bis 45 °C (Polyol) bzw. 30 bis 35 °C (Polyisocyanat) erwärmt. Die Forminnentemperatur vor Befüllen lag bei ca. 65 °C.

In der nachfolgenden Tabelle 1 werden die Rezepturen zur Herstellung der Formkörper zusammengestellt:

Tabelle 1

| Versuch | Isocyanat | Polyol | Kennzahl | Bemerkungen |
|---|---|---|---|---|
| 1 | 1 | 1 | | Vergleichsbeispiel |
| 2<br>3 | 2<br>3 | 1<br>1 | 118 | erfindungsgemäße Beispiele |
| 4 | 1 | 2 | | Vergleichsbeispiel |
| 5<br>6 | 2<br>3 | 2<br>2 | 118 | erfindungsgemäße Beispiele |
| 7 | 1 | 3 | | Vergleichsbeispiel |
| 8<br>9 | 2<br>3 | 3<br>3 | 118 | erfindungsgemäße Beispiele |

Bewertung der Versuche (Weatherometer-Test)

Zum Vergleich der erfindungsgemäßen Beispiele mit den Vergleichsversuchen nach dem Stande der Technik wurde ein Weatherometer-Test durchgeführt. Als Meßgröße für die Veränderungen der Formkörper

durch den Witterungseinfluß wurde der Glanzgrad nach Gardner bestimmt. Der Glanz nach Gardner wird nachstehend in Tabelle 2 in Abhängigkeit von der Bewitterungszeit im Weatherometer mitgeteilt.

Tabelle 2

| Versuch | Glanz nach Gardner (%) nach Bewitterungszeit (h)* | | | | | | | | |
|---|---|---|---|---|---|---|---|---|---|
| | 0 | 500 | 1000 | 1500 | 2000 | 2500 | 3000 | 3500 | 4000 |
| 1 | 60 | 78 | 71 | 26 | - | - | - | - | - |
| 2 | 60 | 67 | 72 | 72 | 71 | 77 | 34 | 3 | - |
| 3 | 28 | 37 | 46 | 48,5 | 49 | 22 | 3 | - | - |
| 4 | 59 | 75 | 75 | 5 | - | - | - | - | - |
| 5 | 55 | 67 | 69 | 73 | 71 | 19 | - | - | - |
| 6 | 52 | 61 | 64 | 66 | 50 | - | - | - | - |
| 7 | 64 | 62 | 67 | 69 | 38 | - | - | - | - |
| 8 | 49 | 57 | 64 | 67 | 68 | 66 | 64 | 43 | 4 |
| 9 | 55 | 62 | 66 | 68 | 66 | 62 | 39 | 2 | - |

* Die Bewitterung erfolgte im Takt 17 Minuten trocken, 3 Minuten Regen.

**Patentansprüche**

1. Verwendung von Epoxidgruppen aufweisenden organischen Verbindungen, die einer Wärmebehandlung bei 30 bis 150 °C in Gegenwart eines Alkylierungsmittels unterzogen worden sind, als die Witterungsstabilität erhöhende Hilfsmittel bei der Herstellung von Formkunststoffen auf Basis von Polyisocyanat-Polyadditionsprodukten nach der Reaktionsspritzgußtechnik.

2. Verwendung gemäß Anspruch 1 bei der Herstellung von Formteilen des Dichtebereichs 0,8 bis 1,4 $g/cm^3$ aus gegebenenfalls Harnstoffgruppen aufweisenden Polyurethanen.

3. Verwendung gemäß Anspruch 1 und 2, dadurch gekennzeichnet, daß die einer Wärmebehandlung in Gegenwart von Alkylierungsmitteln unterzogenen, Epoxidgruppen aufweisenden Verbindungen in Abmischung mit der bei der Herstellung der Formkörper verwendeten Polyisocyanat-Komponente eingesetzt werden.

4. Verwendung gemäß Anspruch 3, dadurch gekennzeichnet, daß die Abmischung aus Polyisocyanat-Komponente und einer Wärmebehandlung in Gegenwart eines Alkylierungsmittels unterzogenen, Epoxidgruppen aufweisenden Verbindungen in situ hergestellt worden ist, indem ein Gemisch aus (i) zumindest eines Teils der Polyisocyanat-Komponente mit (ii) mindestens einer Epoxidgruppen aufweisenden organischen Verbindung in Gegenwart eines Alkylierungsmittels einer Wärmebehandlung bei 50 bis 150 °C unterzogen worden ist.

Europäisches Patentamt

# EUROPÄISCHER RECHERCHENBERICHT

Nummer der Anmeldung
EP 93 10 7145

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-3 406 140 (W.J. POLESTAK ET AL.)<br>* Anspruch 1 *<br>* Spalte 1, Zeile 40 - Zeile 52 *<br>* Spalte 4, Zeile 55 - Zeile 71 *<br>--- | 1 | C08K5/15<br>C08G18/70<br>C08L75/04<br>//(C08L75/04, 63:00) |
| A | US-A-4 737 564 (A.B. GOEL)<br>* Ansprüche 1,2 *<br>* Spalte 3, Zeile 31 - Zeile 49 *<br>--- | 1 | |
| D,A | EP-A-0 368 031 (BAYER)<br>* Ansprüche 1,3,4 *<br>----- | 1 | |
| | | | **RECHERCHIERTE SACHGEBIETE (Int. Cl.5 )** |
| | | | C08K<br>C08L<br>C08G |

Der vorliegende Recherchenbericht wurde für alle Patentansprüche erstellt

| Recherchenort | Abschlußdatum der Recherche | Prüfer |
|---|---|---|
| DEN HAAG | 20 AUGUST 1993 | VAN PUYMBROECK M. A. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)